# EUROPEAN PATENT APPLICATION

(11) **EP 4 134 146 A1**
(43) Date of publication of application: **15.02.2023**
(21) Application number: 21190517.9
(22) Date of filing: 10.08.2021
(51) Int. Cl.: B01D 27/02, B01D 27/14, C02F 1/00, C02F 1/28, C02F 1/42

(54) **FILTER CARTRIDGE FOR FILTRATION OF LIQUIDS**

(71) Applicant: BRITA SE, 65232 Taunusstein (DE)
(72) Inventor: BERNARD, Dominik, 55118 Mainz (DE); ZÖLLER, Jochen, 56355 Nastätten (DE); REDER, Ernst, 55278 Hahnheim (DE)

(57) **Abstract**

The invention relates to a filter cartridge (1) for the filtration of liquids. The filter cartridge (1) has a Filter chamber housing (3) with an inlet opening (7) and with an outlet opening (8) for a liquid flowing through the Filter chamber housing (3). At least one filter medium (4) for filtration of the liquid flowing therethrough is disposed within the filter chamber volume (5) enclosed by the Filter chamber housing (3). The filter cartridge (1) has a compression device (2) with at least one compression element (9) (9). With the compression element (9) (9), a compacting force can be exerted on the filter medium (4) in order to compact the filter medium (4). The filter cartridge (1) has two filter chamber sections (6), each of which can be filled with a filter medium (4). The compression device (2) is arranged between the filter chamber sections (6). The compression device (2) is designed in such a way that it can perform an expansion movement. The expansion movement exerts a pressure force on the filter medium (4) in at least one of the two filter chamber sections (6).

## Description

### Technical field

The invention relates to a filter cartridge for the filtration of liquids, wherein the filter cartridge has a filter chamber housing with an inlet opening and with an outlet opening for a liquid flowing through the filter chamber housing, wherein at least one filter medium for the filtration of the liquid flowing through is arranged within the filter chamber volume enclosed by the filter chamber housing, and wherein the filter cartridge has a compression device with at least one compression element, with which a compression force can be exerted on the filter medium in order to compress the filter medium.

### Background of the invention

Single or multi-stage liquid filtration systems are commonly used for the treatment of drinking water, where a filter cartridge with activated carbons is typically used in a first filter stage to reduce the concentration of impurities such as chlorine, suspended solids and heavy metals such as lead. Optionally, the cartridge contains ion exchange resins to reduce the concentration of calcium and magnesium ions, resulting in a reduction in water hardness. The filtered water usually has a better taste and also has improved quality for human consumption. Usually the filter media are solid materials in granular state, with the particles of the filter media having regular shapes (such as a spherical shape), irregular shapes, or a mixture of both. The filter medium is usually arranged as a loose fill within a filter chamber within a filter cartridge housing. The filter cartridge housing can be designed in different shapes. For example, elongated and cylindrical filter cartridges are known. In such filter cartridges, the liquid entering the filter chamber housing through the inlet opening flows through the filter medium that is confined within the filter chamber housing. The liquid filtered by the filter medium then exits the filter chamber housing through an outlet opening. However, other shapes of filter cartridges are also conceivable, such as an elongated and oval shape, a conical shape or a rectangular, box-like shape.

During operation of the filter cartridge, the flow of the liquid through the granular filter medium may form undesirable bypasses or channels within the filter medium. After the formation of such channels the liquid tends to flow through these channels which results in less contact of the liquid with the filter medium and with increased depletion of the filter medium around such channels. The filter effect is thereby reduced. Such channels within the filter medium are created in particular when the flow rate of the liquid through the filter medium is increased. At a high flow rate of the liquid through the filter medium, a pressure drop occurs along the flow path between the filter cartridge inlet and the filter cartridge outlet. The resulting dynamic pressure and pressure drop compress the filter media locally, causing the granular filter media to settle and compress.

This causes a change in the flow path of the liquid. Due to the locally compressed filter medium, in some areas of the filter medium the liquid flow is reduced to almost zero, while in other areas of the filter medium a correspondingly high volume flow of the liquid is created, resulting in the formation of the channels. The liquid to be filtered can flow through these channels with low resistance. In this case, the liquid to be filtered flows directly into the extraction area with little or no contact with the filter medium, resulting in the impurities remaining within the filtered water.

To prevent the formation of channels inside the filter cartridges, expansion media are used which exert a pressure force on the filter medium in order to compress the filter medium. In particular, nonwovens that are for example made of polyethylene terephthalate (PET), are used as expansion media. The nonwovens are arranged as one or more nonwoven layers in contact with the filter medium in the filter cartridge, whereby the nonwoven layers are compressed at the beginning of the service life of the filter cartridge. Due to the restoring force of the compressed nonwoven layers, a compressive force is applied to the adjacent filter medium, which reduces the formation of channels during the use of the filter cartridge. The restoring force generated by the nonwoven layer depends on the thickness of the nonwoven layer, the degree of compression of the nonwoven layer, and the composition of the nonwovens and the fiber thickness inside the nonwovens. However, the restoring deflection of the nonwoven layer is very small in relation to the restoring force, resulting in a small compressive force that is applied to the filter medium. Furthermore, the restoring force of the nonwoven layer depends on the duration of use of the cartridge, so that it decreases sharply or disappears completely after longer periods of use. In particular the very small filter media particles can escape the filter media housing during packaging, shipping or during use of the filter cartridge, resulting in shrinkage of the filter media and favoring channel formation within the filter media.

Furthermore, some filter media are mechanically or chemically altered during use and thus also experience a change in volume, among other things. This change in volume can be either an increase or a decrease in volume, depending on the filter medium in question and the process that alters the filter medium during use. Thus, the expansion media and in particular the nonwoven layers are preferably designed to adapt to such a change of volume of the filter medium during use.

When cutting the nonwovens from nonwoven sheets into individual nonwoven layers, different nonwoven thicknesses at a nonwoven sheet start or at a nonwoven sheet end lead to jamming or skewing of the nonwoven sheets within the production line. This results in production downtimes or time-consuming set-up times for re-setting the production machine. In order to ensure consistent quality in the form of a consistent thickness of the nonwoven layer and thus a consistent restoring force during the production of a filter cartridge, elaborate and cost-intensive quality tests accompanying series production are necessary. Furthermore, only a small number of suppliers are available on the market who can manufacture or supply suitable nonwoven sheets for use in filter cartridges. This creates a high risk of a supply bottleneck in the event of a possible failure or discontinuation of a supplier.

Disadvantages often include contamination of the nonwovens by bisphenol A (BPA) or catalyzers like e.g. antimony. Even in small quantities, BPA contributes to the development of diseases such as diabetes mellitus, obesity, thyroid dysfunction, developmental disorders (especially in children) and infertility in humans. Therefore, complex and serial migration tests are necessary to determine and control the content of BPA as well as the total migration from or into food contact materials. Furthermore, the nonwoven made of PET means that the different materials that are used for the manufacture of the filter cartridges can only be separated by using complex and costly recycling processes.

If the filter medium comprises two different types of filter materials like e.g. activated carbon material and ion exchange resins, the different types of filter materials are either mixed within a single filter chamber or arranged in separate filter chambers. In order to avoid the unwanted formation of channels, each filter chamber requires corresponding nonwoven layers that apply a compressive force to the respective filter material. Due to different characteristics of the respective filter material, the characteristics of the nonwoven layers may be adapted and thus differ as well.

It is considered to be an object of the present invention to provide a filter cartridge whereby the formation of unwanted channels within a granular filter medium is reduced in a cost-effective manner over an extended period of use of the filter cartridge.

### Summary of the invention

The present invention relates to a filter cartridge for the filtration of liquids, characterized in that the filter cartridge has two filter chamber sections which can each be filled with a filter medium and between which the compression device is arranged, the compression device being designed in such a way that the compression device can carry out an expansion movement and a compressive force is thereby simultaneously exerted on the respective filter medium in each of the two filter chamber sections. The expansion movement can be achieved, for example, by the compression device projecting at least partially into the filter chamber housing and by the compression element being of balloon-shaped design, the volume of the balloon-shaped compression element increasing as a result of an internal pressure being applied to the balloon-shaped compression element. The balloon-shaped compression element can be a balloon made of an elastic and pressure-tight material filled with compressed air. The compressed air within the balloon creates an outward force that causes the balloon to expand and prevents the formation of cavities or channels in the filter material that is confined within the two adjacent filter chamber sections. Thus, a compressive force is applied to the respective filter medium without need for nonwoven layers. Furthermore, by arranging the compression device between two filter chamber sections, only one compression device is required that applies a compressive force to each of the filter media within the respective filter chamber section. Thus, with a compression device arranged between the two filter chamber sections, pressure forces can be exerted on both filter media at the same time.

In order to allow the liquid flowing through the filter chamber housing to pass from one filter chamber section into the other filter chamber section, the filter cartridge comprises passageways for the fluid that bypass the compression device that is arranged between the two filter chamber sections. If the compression device is formed by a balloon, such a passageway can be formed e.g. by ducts which are arranged along an inner wall of the filter chamber housing surrounding the balloon and that provide for a fluid conducting connection between the two filter chamber sections. Each end of each duct can be covered with a sieve in order to avoid a filter medium to be carried along with the fluid and to pass through the duct. It is also possible to make use of a torus shaped balloon that provides for a passageway through the open center of the torus shaped balloon.

As described before, the compression device optionally not only provides for a compression force that acts on the two filter media that are confined within the respective filter chamber section, but the compression device can also be designed in such a way that the compression device can carry out a contraction movement in case that the volume of one or both of the filter media increases during the service life of the filter cartridge. For some applications and filter media such an increase of volume is considered advantageous or cannot be avoided, and the compression device should adapt to such an increase of volume. Thus, in combination with the expansion movement the compression device can allow for e.g. an elastic or springy compensation of any change of volume of the filter media within the two filter chamber sections that might occur during use of the filter cartridge.

In an advantageous embodiment of the invention, the compression device is completely enclosed by the filter chamber housing. This means that the compression device is fully confined by the filter chamber housing and no opening within the filter chamber housing is required to apply a compressive force that is generated outside of the filter chamber housing to the filter medium that is confined within the filter housing. Thus, the expansion movement of the compression device can be directed predominantly in the direction of one or both filter chamber sections within the filter chamber housing. Thus, the compressive force is applied to the filter medium in a particularly targeted manner, resulting in a particularly strong compression of the filter medium and resulting in effectively preventing any unwanted channel formation within the filter medium.

As the compression device is completely enclosed by the filter chamber housing, the filter cartridge can be designed to be completely closed with respect to the compression device. Feed-through openings for passing the compression element into the filter chamber housing and a complex sealing system for sealing the feed-through openings are not necessary. In addition, the compression device and the filter chamber housing can be manufactured separately from one another and can be assembled in a particularly time- and cost-saving manner. In case that the compression device is mounted inside the filter chamber housing before the filter chamber housing is closed, the compression device is designed and mounted in such a manner as to allow for a further processing and completion of the manufacturing process of the filter chamber housing. Thus, the compression device e.g. should withstand ultrasonic welding of previously separate filter chamber housing parts or should be mounted in a manner as to allow for screwing together two separate filter chamber housing parts without being damaged and without interfering with the manufacturing process of the filter chamber housing.

Advantageously, the compression device is loosely arranged between the two filter chamber sections inside of the filter chamber housing. During manufacture of the filter cartridge, a first filter medium can be filled into the filter chamber housing, thereby forming a first filter chamber section. Then the compression device is put on top of the first filter medium and separates the first filter medium from the remaining space within the filter chamber housing. Afterwards, the remaining space can be filled with a second amount of filter medium, thereby forming a section filter chamber section by the compression device that is arranged between the two filter chamber sections.

According to an optional embodiment of the invention the compression device is detachably connected to the filter chamber housing. For this purpose, the compression device can be inserted into the filter chamber housing by means of a frictional connection or a form-fit connection. A frictional connection can be produced, for example, by a spring-like connection between the compression device and the filter chamber housing. A form-fit connection can be made, for example, by a snap connection. This makes it particularly easy to separate the compression device and the filter chamber housing by type for the purpose of a recycling or reprocessing process.

In order to be able to carry out the expansion movement in the direction of the filter medium, the compression device can be made at least partially of an elastically deformable material. An elastic material deforms when being subjected to a deforming force generated within the filter cartridge, and returns to its original shape when the deforming force is removed. An inelastic or rigid material behaves in such a way that the material is not deformed or is deformed only to a negligible extent when a deforming force is applied. According to an advantageous aspect of the invention, an elastic deformation element is positioned in between opposing sides of the compression element abutting the respective filter chamber sections. The elastic deformation element can be inserted in between the two filter chamber sections in a compressed condition, which will result in an expansion force that is generated by the compressed elastic deformation element and that is directed outward and towards each of the two filter chamber sections. The elastic deformation element can be made of e.g. rubber or an elastomeric plastic material. The elastic deformation element preferably is chemically inert to the liquid or coated with a material that makes it chemically inert to the liquid.

In order to apply the compressive force to a large volume of the filter medium, according to an advantageous embodiment of the invention the compression device comprises a pressure element which is pressed towards a filter chamber section by the expansion movement. The pressure element can be e.g. a flat plate made of a rigid material. Preferably, the pressure element can be moved like a piston into the interior of a filter chamber section. The compression device with the pressure element must allow for a fluid conducting connection between the two filter chamber sections with the two filter media. This can be achieved by e.g. one or more separate bypass ducts or by openings within the compression device and in particular within the pressure element that allow for a free flow of the fluid through the compression device.

Food-safe plastics, such as polyethylene terephthalate (PET), polypropylene (PP) or polyamide (PA), are suitable as rigid materials for the pressure element. However, metallic materials such as stainless steels or aluminum can also be used to manufacture the pressure element.

Optionally, the compression device is designed in such a way that both the compression element and the pressure element consist of the same material, whereby the compression element is designed to generate a deformation force that is directed towards a filter chamber section, whereas the pressure element is designed to transfer the generated force to a large surface of the filter medium inside the respective filter chamber section that faces the compression device. Optionally, the surface of the pressure element is smaller than a cross-sectional area of the interior of a filter chamber section, and a deformable membrane is mounted in a liquid-tight manner between the outer edge of the pressure element and an inner wall of the filter chamber housing that surrounds the pressure element. It is also possible that the membrane fully covers the cross-sectional area within the filter chamber section, and that the pressure plate is pressed against the membrane and applies the pressure through the membrane onto the filter medium that is in contact with the membrane. During an expansion movement of the pressure plate, the membrane is deformed by the pressure and a compressive force is applied onto the filter medium.

According to an advantageous aspect of the invention, the compression device comprises one or more compression elements that comprise rigid parts and elastically deformable parts, whereby the elastically deformable parts generate a force that moves or pivots the rigid parts in order to apply the pressure onto the filter medium. Thus, the elastically deformable parts can be small and located at a distance to the filter medium, whereas the rigid parts transfer the force onto the filter medium. Several compression elements can be arranged at a distance towards each other and distributed over the cross-sectional area within the filter chamber housing.

According to an advantageous embodiment of the invention, the compression device comprises a spring device, whereby the pressure element is pressed into a filter chamber section by means of the spring device which generates the compressive force acting on the filter medium. By means of the spring device, a spring pressure force can be generated in a particularly simple manner, with which a pressure force acting on the filter medium can be generated. Depending on the position and arrangement of the spring device within the filter chamber housing, the spring device can be designed, for example, as a helical compression spring, a disc spring, a volute spring, a parabolic spring, a membrane spring or a leaf spring. Such springs are generally made from a metallic material. However, non-metallic springs such as rubber springs or springs made from an elastomeric plastic are also suitable for use with the compression device. Furthermore, it is also possible to integrate air springs or gas springs inside the filter cartridge. A combination of the above spring types is also possible.

In order to apply a particularly uniform pressure force to the pressure element in the direction of the filter medium and according to an embodiment of the invention, the spring device can comprise one or more spring elements. The spring elements can be evenly distributed over the cross-sectional area of the filter chamber section. A spring element can be designed as one of the above-mentioned spring types.

In order to be able to easily adapt the spring force to different filter media, it is considered advantageous to arrange several spring elements in parallel or in series so that a spring travel or a spring force or both can be adjusted to the characteristics of the respective filter medium that is filled into the filter chamber section. A parallel arrangement of a plurality of similar spring elements results in an increase in the spring force. For example, arranging several helical compression springs in a parallel manner results in an enlarged spring compression force. A series connection of spring elements, on the other hand, increases the spring travel. In the case of a disc spring, the parallel connection of the spring elements is produced by stacking the disc spring elements in the same direction. The series connection of the spring elements is achieved by alternately stacking the individual cup springs.

This makes it particularly easy to adjust both the spring force and the spring travel.

According to an advantageous embodiment of the filter cartridge the compression device forms a separating device with which the two filter media in the two filter chamber sections are separated from one another. In accordance with the invention, the shape of the separating device is adapted to the shape of the filter chamber housing in such a way that the first filter chamber section can be completely closed off from the second filter chamber section with respect to the filter medium that is contained within the respective first and second filter chamber sections. However, the separating device either allows for or is bypassed by a fluid conductive connection like e.g. one or more ducts or through-holes. Thus, a spatial separation of the two filter media is possible which facilitates the subsequent recycling and reuse of the respective filter media, which can be made from different materials. Thus, advantageously, several different filter media can be used in one filter cartridge, with different filter media being filled into the respective filter chamber sections. Optionally and according to the invention, a filter medium comprising activated carbon is arranged in a first filter chamber section and a filter medium comprising ion exchange resins is arranged in a second filter chamber section. The two filter chamber sections are arranged relative to one another in such a way that the liquid first flows through the filter medium arranged in the first filter chamber section and then through the filter medium arranged in the second filter chamber section. This results in particularly effective filtration of the liquid and in a significant reduction of both, undesirable flavors and contaminating particles.

In yet another embodiment of the invention the separating device comprises two separating elements between which at least one spring device is arranged in such a way that the two separating elements are each pressed outward with respect to each other. The volume between the two separating elements can be used for arranging or mounting one or more spring elements of the spring device in between the two separating elements that are preferably made of a rigid material.

In order to allow liquid to flow through the separating element, the separating element comprises one or more flow-through openings through which liquid can pass. A size of the flow-through openings is to be selected such that the particles of granularly present filter media cannot pass through the flow-through openings. This makes it possible to separate different filter media by such a separating element, even though the liquid can pass through the separating element. Preferably, the separating element comprises several flow-through openings that are evenly or nonuniformly distributed over a cross-section of the filter chamber housing in order to make use of the full cross-section for the flow of the fluid from one filter chamber section to the other filter chamber section, which allows for a better and more effective utilization of the filter medium in each filter chamber section.

According to a very advantageous aspect of the invention, the pressure element is formed by the separating element, which allows for a very small and compact design of the compression device and, by consequence, also of the filter cartridge. The flow-through openings can be formed within the pressure element. Thus, both a pressure force can be transmitted to the filter media by the pressure element and a separation of the filter media can be achieved.

In order to enable a particularly simple installation of the filter cartridge, the compression device is manufactured in one piece. The insertion of a compression device manufactured in one piece is possible with very little assembly effort. In addition, pre-assembly of a compression device that consists of several individual components is not required, thus eliminating the need for a time-consuming and cost-intensive pre-assembly.

In yet another embodiment of the invention, the compression device is made of a plastic. In accordance with the invention, the compression device is made in one piece and is designed in such a way that it can be manufactured by means of a plastic injection molding process. Plastic components can be manufactured cost-effectively by means of a plastic injection molding process, in particular in large quantities.

According to another aspect of the invention, an intermediate layer is arranged between the separating element and the filter medium. The intermediate layer can be made of a nonwoven layer or of a textile material. Such a nonwoven or textile layer can retain a small-sized granular filter medium so that it does not escape through the flow-through openings provided in the separating element. At the same time, the nonwoven or textile layer is permeable to liquids to allow the filtered water to pass through. Thus, channel formation within the filter medium can be prevented without much interference of the flow of liquid through the filter cartridge. Due to such an intermediate layer that can retain very small particles of a granular filter medium, the flow openings can be designed to be quite large in diameter and total cross-sectional area which facilitates the flow-through of the liquid. Thus, a large volume flow of the liquid can be achieved, which reduces the filtering time that is required for the filtration of the liquid.

The intermediate layer can be inserted in a simple manner e.g. by loosely placing it between the separating element and the filter medium in the filter cartridge. This makes it particularly easy to separate the components of the filter cartridge by type for a recycling process. In order to prevent an unwanted shifting or displacement of the intermediate layer, the invention optionally provides for the intermediate layer to be connected to the separating element by means of ultrasonic welding or by means of an adhesive process. The welded or bonded connection can be designed in such a way that the nonwoven layer can be easily removed from the separating element after the expiration of the service life of the filter cartridge in a simple manner and virtually without leaving any residue. This facilitates the separation of different components of the filter cartridge for a subsequent recycling process.

According to another aspect of the invention, the intermediate layer consists of or comprises a filter material. As a result, an additional filter effect is created by the intermediate layer, which enhances the filtering efficiency of the filter cartridge without significantly enlarging the filter cartridge. Furthermore, the additional filtering effect of the intermediate layer makes it possible to reduce the amount of filter media that is contained within the filter chamber sections. Thus, a particularly small filter cartridge can be produced with the use of a small amount of granular filter media.

In order to support the expansion movement and according to an advantageous embodiment of the invention, the intermediate layer is made of an expansion medium whose volume increases due to a contact with liquid. This generates an additional compressive force acting on the filter media. Thus, the compression device and the spring device can be designed to be particularly small.

It is also possible that the intermediate layer is made of an elastic material that can be compressed in case of an expansion of the filter medium. For some applications the volume of the filter medium may increase during the service life of the filter cartridge. An intermediate layer made of an elastic material can compensate for at least a small amount of expansion of the filter medium.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic representation of the filter cartridge according to the invention with a balloon-like compression device in a sectional view,
Figure 2 illustrates a schematic representation of a further embodiment of the filter cartridge according to the invention in a sectional view,
Figure 3 illustrates a schematic representation of a further embodiment of the filter cartridge according to the invention in a sectional view and
Figure 4 illustrates a schematic representation of the compression device of the filter cartridge according to the invention in a perspective view.

### Detailed description of the drawings

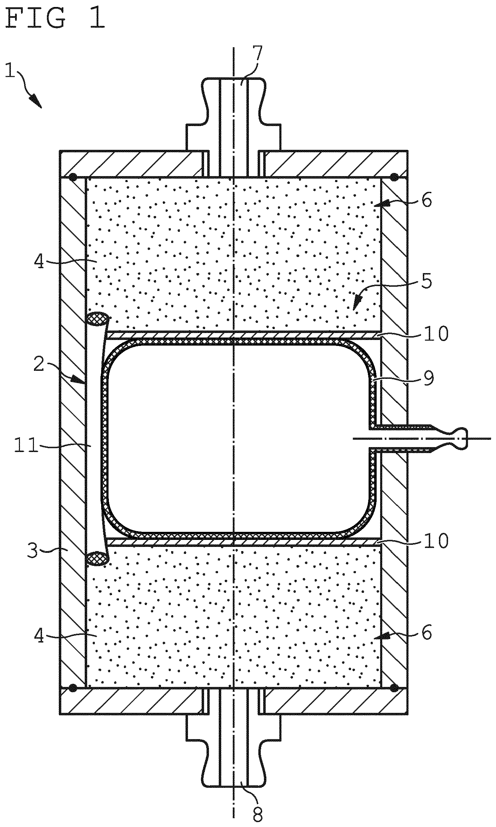

Figure 1 illustrates a filter cartridge 1 according to the invention with a compression device 2 arranged therein. The filter cartridge 1 and a filter chamber housing 3 of the filter cartridge 1 are designed cylindrical and elongated. Two granular filter media 4 are arranged within the filter chamber volume 5 enclosed by the filter chamber housing 3. The filter chamber housing 3 has two filter chamber sections 6, in each of which a filter medium 4 is arranged. The liquid flowing into the filter cartridge 1 through an inlet opening 7 is filtered by means of the filter media 4 and flows out of the filter cartridge 1 through an outlet opening 8.

The compression device 2 is arranged between the two filter chamber sections 6. A compression element 9 of the compression device 2 is a balloon that comprises compressed air. By applying an internal pressure to the balloon-like compression element 9, the balloon tries to increase the volume of the balloon and to expand. The compression device 2 further comprises two pressure elements 10, whereby each pressure element 10 is formed by a pressure plate. The two pressure elements 10 are arranged on opposing sides of the compression element 9, i.e. for each filter chamber section 6 a corresponding pressure plate of the compression device 2 faces the respective filter chamber section 6. Both pressure elements 10 can be moved in the direction of the filter media 4 contained within the respective filter chamber section 6. In case of an expansion movement generated by the compression device 2, the pressure elements 10 are each displaced in the direction of the corresponding filter chamber section 6 and exert a compressive force on the filter medium 4 contained therein. The pressure force acting on the filter media 4 compresses the filter media 4 so that an undesired channel formation within the filter media 4 due to the flow of liquid through the filter media 4 can be prevented.

One or more ducts 11 are arranged along an inner wall of the filter chamber housing 3 that surrounds the balloon-like compression element 9. The ducts 11 provide for a fluid conducting connection between the two filter chamber sections 6 at opposite sides of the compression element 9.

The compression device 2 and in particular the compression element 9 allows for a springy compensation of a volume change of the filter medium within one or both of the filter chamber sections 6.

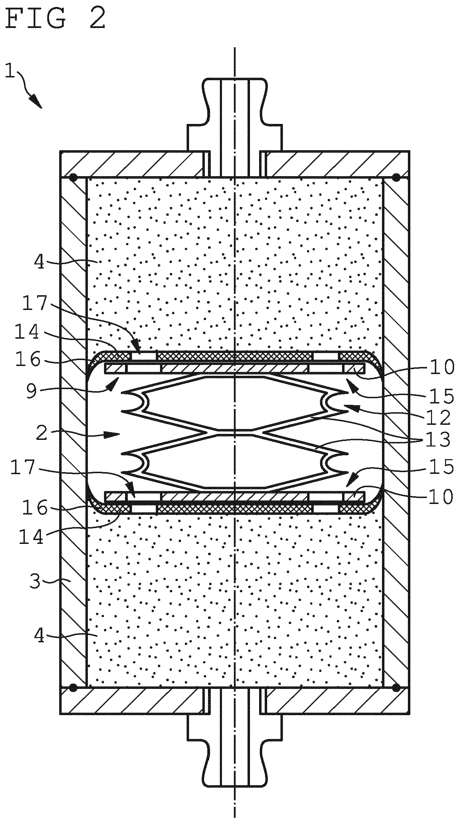

Figure 2 illustrates a preferred embodiment of the filter cartridge 1 according to the invention. The compression device 2 has a spring device 12 mounted in between the two pressure plates of the pressure element 10. The spring force generated by the spring device 12 tries to move each pressure element 10 into the corresponding filter chamber section 6, resulting in the generation of a compressive force acting on the filter medium 4 contained in each filter chamber section 6. By means of the spring device 12, a spring pressure force can be generated in a particularly simple manner. The spring device 12 comprises several spring elements 13 designed as compression springs. In figure 2, the spring elements 13 are illustrated in a compressed condition, wherein the spring device 12 generates a compressive force in the direction of the two filter chamber sections 6. Between each pressure element 10 and an enclosing inner wall of the filter chamber housing 3 a membrane 14 is arranged in a fluid-tight manner. The membrane 14 is made of an elastic material. During an expansion movement of the compression device 2, the pressure element 10 presses against the membrane 14, which is elastically deformed by the force effect, thereby exerting a compressive force on the filter media 4. The pressure force acting on the filter media 4 compresses the filter media 4 so that channel formation within the filter media 4 can be prevented.

The compression device 2 forms a separating device 15 with separating elements 16, whereby the separating elements 16 are formed by the respective pressure plates of the corresponding pressure element 10. Each of the separating elements 16 comprises a plurality of flow-through openings 17 through which the fluid to be filtered can pass. A diameter or cross-sectional area of the flow-through openings 17 is preset such that the particles of the granular filter media 4 cannot pass through the flow-through openings 17. This allows for separating the two filter media 4 from one another. The two filter media 4 can be made of different filter materials. Thus, one filter medium 4 can comprise an active carbon material, whereas the other filter medium 4 may comprise an ion exchange resin or some other material that e.g. affects the water hardness of water that flows through the filter cartridge.

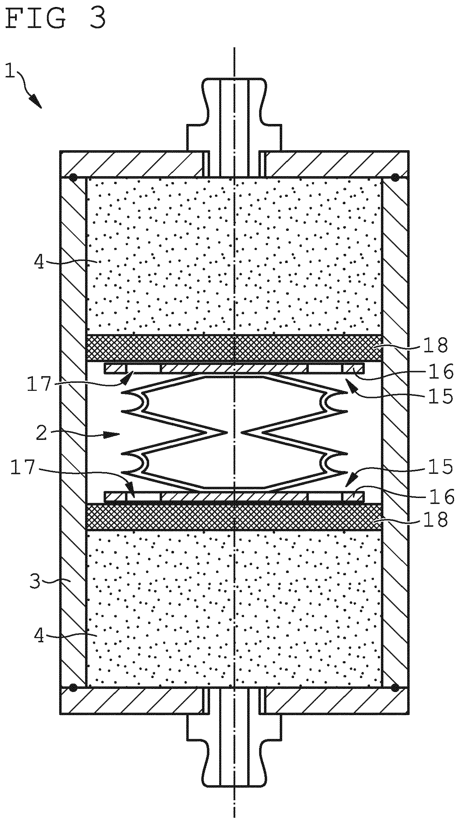

Figure 3 illustrates another embodiment of the filter cartridge 1 according to the invention. At each side of the compression device 2, an intermediate layer 18 is inserted between the separating element 16 and the filter medium 4. The intermediate layer 18 is made of a nonwoven layer. This nonwoven material retains the granular filter medium 4 so that it cannot escape through the flow-through openings 17 provided in the separating element 16. The intermediate layer 18 can be made of or comprise a filter material, so that an additional filtering effect is achieved by the intermediate layer 18. This enables a very effective filtration of the liquid within a small volume of the filter cartridge 1.

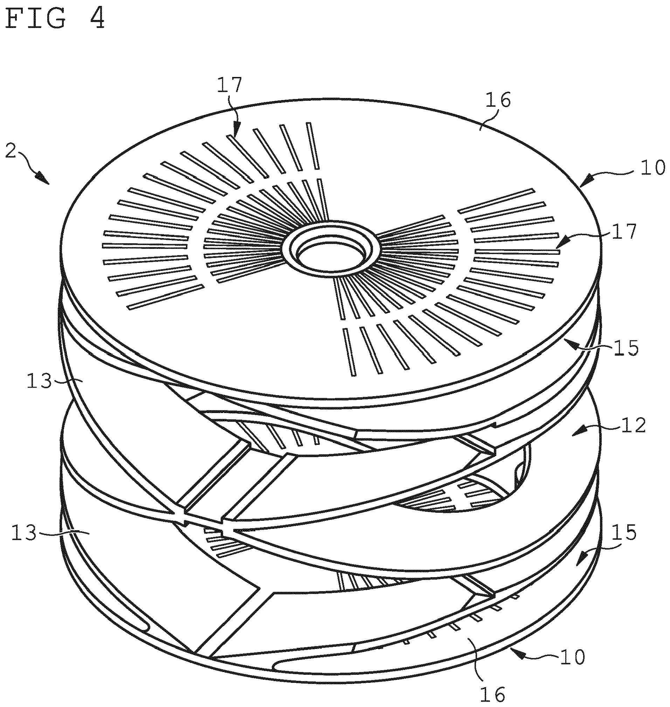

Figure 4 illustrates a preferred embodiment of the compression device 2 according to the invention. The spring device 12 has several spring elements 13 which are connected to one another via elastically deformable connecting sections. The spring elements 13 are of the type of disc springs. The spring elements 13 are arranged in series as well as in parallel, which allows for an easy adaption and presetting of a desired spring travel and a spring force. The compression device 2 comprises two pressure plates at opposing sides of the spring device 12. The pressure plates are designed as separating elements 16 and comprise flow-through openings 17 in order to provide for a fluid conductive connection of the two filter chamber sections 6. Additional parts like inserts, plates, sealing elements or layers of fluid permeable material like e.g. a textile or nonwoven material can be arranged outside or inside the spring-type compression device 2 in order to provide for a more efficient separation and respective compression of the filter media 4 as well as for a fluid conductive connection between the two filter chamber sections 6 within the filter chamber housing 3 on each side of the compression device 2

The pressure elements 10 both exerts a compressive force on the filter medium 4 and causes the filter media 4 to be separated or retained. The compression device 2 illustrated in figure 4 can be made of a metal, a plastic or composite material, or can be manufactured as a one-piece element e.g. made of a suitable metal or plastic material.

Furthermore, the compression device 2 also allows for a compensation of a volume change of the filter medium 4 that might occur during the service life of the filter cartridge 1 e.g. due to chemical or mechanical alterations of the filter medium 4.

## Claims

1. Filter cartridge (1) for the filtration of liquids, wherein the filter cartridge (1) has a filter chamber housing (3) with an inlet opening (7) and with an outlet opening (8) for a liquid flowing through the filter chamber housing (3), wherein at least one filter medium (4) for the filtration of the liquid flowing through is arranged within a filter chamber volume (5) enclosed by the filter chamber housing (3), and wherein the filter cartridge (1) has a compression device (2) with at least one compression element (9), with which a compression force can be exerted on the filter medium (4) in order to compress the filter medium (4), **characterized in that** the filter cartridge (1) has two filter chamber sections (6) which can each be filled with a filter medium (4) and between which the compression device (2) is arranged, the compression device (2) being designed in such a way that the compression device (2) can carry out an expansion movement and a compressive force is thereby exerted on the filter medium (4) in at least one of the two filter chamber sections (6).

2. Filter cartridge (1) according to claim 1, **characterized in that** the compression device (2) is designed in such a way that the compression device (2) can carry out a contraction movement.

3. Filter cartridge (1) according to claim 1 or 2, **characterized in that** the compression device (2) is completely enclosed by the filter chamber housing (3).

4. Filter cartridge (1) according to one of the preceding claims, **characterized in that** the compression device (2) is at least partially made of an elastically deformable material.

5. Filter cartridge (1) according to one of the preceding claims, **characterized in that** the compression device (2) has a pressure element (10) which is pressed into a filter chamber section (6) by the expansion movement.

6. Filter cartridge (1) according to one of the preceding claims, **characterized in that** the pressure element (10) is made of an inelastic material.

7. Filter cartridge (1) according to one of the preceding claims, **characterized in that** the compression device (2) comprises a spring device (12), whereby the pressure element (10) is pressed into a filter chamber section (6) by means of the spring device (12) and the compressive force acting on the filter medium (4) is generated.

8. Filter cartridge (1) according to claim 7, **characterized in that** the spring device (12) comprises one or more spring elements (13).

9. Filter cartridge (1) according to claim 8, **characterized in that** the spring elements (13) are arranged in parallel or in series so that a spring travel or a spring force are adjustable.

10. Filter cartridge (1) according to one of the preceding claims, **characterized in that** the compression device (2) forms a separating device (15) with which the two filter media (4) in the two filter chamber sections (6) are separated from one another.

11. Filter cartridge (1) according to claim 10, **characterized in that** the separating device (15) comprises two separating elements (16) between which the spring device (12) is arranged in such a way that the two separating elements (16) are each pressed outward with respect to each other.

12. Filter cartridge (1) according to claim 11, **characterized in that** the separating element (16) comprises one or more flow-through openings (17) through which liquid can pass.

13. Filter cartridge (1) according to one of claims 11 or 12, **characterized in that** the pressure element (10) is formed by the separating element (13).

14. Filter cartridge (1) according to any one of the preceding claims, **characterized in that** the compression device (2) is made in one piece.

15. Filter cartridge (1) according to any of the preceding claims, **characterized in that** the compression device (2) is made of a plastic.

16. Filter cartridge (1) according to any one of claims 11 to 15, **characterized in that** an intermediate layer (18) is arranged between the separating element (16) and the filter medium (4).

17. Filter cartridge (1) according to claim 16, **characterized in that** the intermediate layer (18) comprises a filter material.

18. Filter cartridge (1) according to claim 16 or 17, **characterized in that** the intermediate layer (18) is made of an expansion medium whose volume increases in case of contact with liquid.

19. Filter cartridge (1) according to claim 16, 17 or 18, **characterized in that** the intermediate layer (18) is made of an elastic material that can be compressed in case of an expansion of the filter medium (4).
